Europäisches Patentamt

European Patent Office

Office européen des brevets

(11) Publication number: **0 094 709**
**A2**

(12) # EUROPEAN PATENT APPLICATION

(21) Application number: **83200651.4**

(22) Date of filing: **06.05.83**

(51) Int. Cl.³: **H 01 S 3/13**
**G 01 J 9/02**

(30) Priority: **13.05.82 NL 8201975**

(43) Date of publication of application:
**23.11.83 Bulletin 83/47**

(84) Designated Contracting States:
**AT DE FR GB IT NL SE**

(71) Applicant: **N.V. Philips' Gloeilampenfabrieken**
**Groenewoudseweg 1**
**NL-5621 BA Eindhoven(NL)**

(72) Inventor: **Dil, Jan Gerard**
**C/O INT. OCTROOIBUREAU B.V. Prof. Holstlaan 6**
**NL-5656 AA Eindhoven(NL)**

(72) Inventor: **van Hijningen, Nicolaas C. J. A.**
**C/O INT. OCTROOIBUREAU B.V. Prof. Holstlaan 6**
**NL-5656 AA Eindhoven(NL)**

(74) Representative: **Duys, Andréas Maria Wilhelmus et al,**
**INTERNATIONAAL OCTROOIBUREAU B.V. Prof.**
**Holstlaan 6**
**NL-5656 AA Eindhoven(NL)**

(54) Laser device and interferometer comprising such a laser device.

(57) According to the invention, in a laser device the effective wave length of which is stabilized, the Fabry-Perot interferometer (15) which forms an effective wave length etalon is also used as a mode selector so that a simple, cheap multimode He-Ne laser can be used. Such a laser device can very readily be used in interferometers.

FIG. 1

EP 0 094 709 A2

0094709

Laser device and interferometer comprising such a laser
device.


The invention relates to a laser device including a laser resonator comprising two reflectors which
are situated on one axis and means are provided for displacing of the reflectors alsong  he said axis wherein
one of the reflectors passes the generated beam of radiation, the device further comprising a beam splitter and
a Fabry-Perot interferometer the interterometer forming
an effective wave length etalon, wherein at least part of
the radiation bean impinges through the interferometer on
a detection system, which controls the said means in such
manner that the effective wavelength established by the
etalon is equal to the effective wave length of the
radiation generated by the laser.

The invention also relates to an interferometer comprising such a laser device.

Such a laser device and interferometer are
known from the article "Wellenlängenstabilisation", Fein-
werktechnik und Messtechik 87 (1979) 8. It is described in
this article that if the distance between the reflectors
of a Fabry-Perot interferometer is not influenced by the
parameters which produce a:variation of the refractive index of the ambient medium (for example air), an effective
wave length etalon is obtained. The effective wave-length
$\lambda_e$ is defined as the wave length in free space $\lambda_o$
(free space is empty space) divided by the refractive in-
dex $\underline{n}$ of the medium (for example air). Thus

$$\lambda_e = \frac{\lambda_o}{n}$$

It is necessary that the medium between the
reflectors of the Fabry-Perot interferometer can assume
the state (temperature, pressure, humidity etc) which prevails in the surrounding atmosphere. The space between the reflectors of the Fabry-Perot interferometer therefore communicates with the surrounding atmosphere. Becouse the distance between the reflectors of the Fabry-Pero interfeometer must be kept constant and temperature variations must have no influence on said distance between the reflectors, the spacing member between the reflectors is preferably manufactured from Zerodur. (Zerodur is a trade name of Messrs. Schott, see "Schott information" (No 1, pp. 1-21) The laser device described in the article above inentioned article "Wellenlängenstabilisation" ,Feinwerktechnik und Messtechnik 87 (1979) 8, a beam of radiation emmerging from a mono mode He-Ne laser is split by a beam splitter and one of the splet beams thus formed passes divergingly through a Fabry-Perot interferometer communicating with the ambient air. One of the interfering rings formed imponges on a detection system comprising two juxtaposed photo cells (a so-called differential photo diode). If the refactive index in the etalon varies, the interference ring is displaced and the diodes are non-uniformly exposed. A difference amplifier then conveys such a voltage to the means for displacing one of the reflectors of the laser that the effective wave length of the laser is adapted and the interference ring is again centered on the photo diodes. The mono-mode He-Ne laser used is expensive. It is therefore an object of the invention to provide a laser device in which it is not necessary to use a mono-mode laser.

A laser device of the kind described in the opening paragraph is characterized according to the invention in that the etalon is centred directly on the said axis and the beam splitter is provided in the radiation path before or after the etalon. Because the etalon is provided directly in the radiation path of the generated radiation beam, one mode is selected and the other mode is rejected (reflected) when a comparatively cheap multimode He-Ne laser is used.

Its is possible to provide the beam splitter before the etalon in the radiation path and to cause one of the split beams, to pass through the etalon parallel to the other split beam to the detection system. However, it is also possible to provide the beam splitter after the etalon in the radiation path and to cause one of the split beams to be incident on the detection system.

Just as in the described prior art laser device, the split beam which is incident on the detection system may be a diverging beam, in which an interence ring is formed which is incident on a diferential photo diode and is continuously centered thereon.

It is also possible, however, for the detection system to be an intensity-senitive detection system and the maximum of the intensity of the radiation path through the etalon to be established by reciprocating the laser reflector at fixed intervals of time

Such an effective wave length-stabilized laser device can often be used particularly readily as a radiationswource in an interferometer instead of frepuency-stabilized laser device. In addition to a source of radiation such an interferometer comprisds a beam splitter to form a first and a second split beam from the beam of radiation generated by the swurce of radiation, which two split beams, after the first split beam has been reflected at a face of the object to be examined, are made to coincide in the plane of a radiation-sensitive detection system.

Such an interferometer which is used as a displacement meter is described in an article in "Philips' Technical Review" 30 No 6/7, at pp 160-165, which article may be considered to be incorporated herein by reference.A reflector is incorporated in the path of each of the split beams. One of these reflectors is accommodated so as te be stationary, while the second is connecred rigidly to the article the displacement of which is to be measured. After reflection of the two split beams they are again made to converge by the beam splitter, said beams which have covered approximately the same path length interfering with each other. The resulting intensity depends on the relative phase of the split beams and will hence vary periodically when the optical path lengh of the second split beam is increased or decreased continuously by a displacement of the object. A period of the interference pattern corresponds to a path length variation having the value of half an effective wave length of the light used. A periodic electric signal can be obtained by means of a radiation-sensitive detector, and the number of cycles which thus is a measure of the displacement of the article can be counted.

The above mentioned article in "Philips' Technical Review" 30, No 6/7, pp. 160-165 describes a special interferometer with particularly good properties, for example, an accuracy to a fraction of 1 um, simple digital indication and distinction between forward and backward displacements. However, the said properties can be obtained only when a special frequency-stabillized laser source is used which provides a laser beam having two oppositely circularly pdarized components of equal intensities but of different frequencies. Such a frequency-stabilized laser source is very expensive. The stabilization method in which the Zeeman effect is used is described in Appl. Phys. Letters 6, 198, 1965.

In Netherlands Patent Application 8005258 (PHN 9846) is laid open to public inspection which may be deemed to be incorporated herein by reference, a similar very accurately operating interferometer is also described in which a laser device embodying the present invention can very readily be used. In this case the radiation-sensitive detection system is a multiple photo cell censisting of a row of linear photo diodes which are in oparation are connected one after the other by an electronic switch to an electronic circuit for processing the signal generated in the photo diodes.

As a result of this detection system operates as a moving frame-shaped detector in which the frame period of the multiple photo cell corresponds to the period of the linear interference pattern of the two super-imposed split beams. The invention described in said Patent Application uses the fact that a sinuoidal interference pattern can be generated in the interferometer and that the intensity variation in the interference pattern occurring as a result of a variation in the path length of a split beam may be considered az a displacement of said interference pattern. The displacement of such a pattern of light and dark lines which inturn may be considered as a frame can be determined by means of a reference frame in the form of a multiple photo cell. Such a multiple photo cell is described elaborately in United States Patent Specification No 3,973,119 (PHN 7442). According to said Patent Specification the displacement of an object can be measured by projection of a first frame which is connected to the article on a reference frame formed by the multiple photo cell. The accuracy of said displacement measurement is determined by the frame period of the first frame. Said frame period is, for example, 635 um. Via a suitable signal processing and interpolation within the signal period a displacement measurement up to an accuracy of in principle 0,5 um is possible.

The invention will now be described in greater detail, by way of example, with reference to the drawing in which

Figure 1 shows diagramatically a first laser device embodying the invention, and

Figure 2 shows diagrammatically a second laser device embodying the invention.

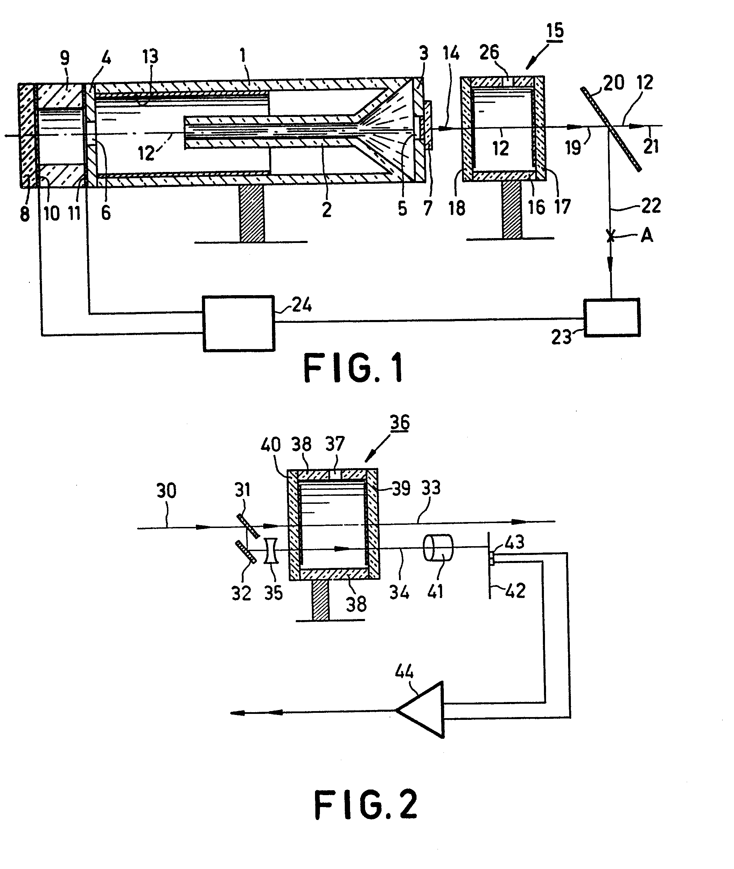

The laser of the device shown in Figure 1 comprises a glass envelope 1 which is filled with a gas (for example, with a He-Ne gas mixture), further comprises a laser campillary 2, and is sealed by means of two metal plates 3 and 4 having respective 5 and 6. Laser reflectors 7 and 8 consisting of a glass substrate on which reflective layers have been deposited on the side facing the inside of the envelope are connected against said plates opposite to the ends of the laser capillary 2. The laser reflector 8 is connected to the plate 4 by a cylinder 9 of an electrostrictive material which has two electrodes 10 and 11 between which a potential can be applied. By applying a potential the material of the cylinder 9 expands in the axial direction (along axis 12) so that reflector 8 can be movedrelative to reflector 7. Other known means of moving the reflector 8 may, of course, also be used, for example electromagnetic,hydraulic or pneumatic means. By applying a sufficiently high potential between plate 3 which also forms the anode and the cathode which consiste of a coaxial metal cylinder 13, a gas discharge in the gas-filled envelope 1 is produced which occurs <u>via</u> the laser capillary 2. The reflectors 7 and 8 together with the laser capillary 2 form the laser resonator. The generated beam of radiation 14 passes through a Fabry-Pero interferometer 15 which is centered on axis 12 and forms an effective wave length etalon. Said etalon comprises a spacer 16 having one or more apertures 26 and two parrallel reflector 17 and 18 having a coefficient of reflection R of approximately 95%. Said reflectors also consist of a substrate on which reflecting layers have been vapour-deposited. Becouse the spacer 16 is manufactured from Zerodur, the distance between the reflectors 17 and 18 is substantially constant and independent of the ambient temperature and humidity. The distance between the reflectors is in this case approximately 4mm. Fabry-Perot interferometers are usually evacuated. By providing aperture 26 in the Fabry-Perot interferometer used in this case, the medium (for example, air) in the etalon between the reflectors can assume the state (pressure, temperature and humidity etc) which also prevails in the remaining part of the device. The beam 19 emanating from the etalon is split into two split beams 21 and 22 by means of a splitting mirror 20. The split beam 22 impinges on an intensity-sensitive detection system 23, for example, a photo diode. Until the iutensity of the split beam 22 is maxiumum, a varying potential is applied _via_ a control amplifier 24 between the electrodes 10 and 11 of the cylinder 9 of electro strictive material, and the laser is controlled so that the generated effective wave length corresponds to the effective wave length fixed by etalon 15. The maximum of the intensity of the radiation path through the etalon can be found by periodically reciprocating the laser reflector By providing, at point A in the path of radiation, a second etalon which is tuned to the same effective wave length as the first etalon but which has a different distance between its reflectors, the device can even be improved. By providing said second etalon in the device, the same mode is selected and the other modes are reflected every time when the deivice is switeleton

       Figure 2 shows diagrammatically part of another laser device embodying the invention. The beam of radiation 30 generated by a laser _not_ shown here identical to that of Figure 1 is split into two paralle split beams 33 and 34 by means of a splitting mirror 31 and a mirror 32 which together form a beam splitter. Beam 34 passes through a diverging lens 35 and then, together with the split beam 33, through the Fabry-Perot etalon 36. Said etalon comprises a spacer 38 of Zerodur having an aperture 37 and two reflectors 39 and 40 having a coefficient of reflection R of approximately 95%. In this case too the reflectors consist of a substrate on which reflecting layers have been vapour-deposited. Because the spacer is manufactrured from Zerodur, the distance (in this case 4 mm) between the reflectors 39 and 40 is substantially constant and independent of the ambient temperature and humidity. By providing aperture 37 in the etalon the medium (for example, air) in the etalon between the reflectors can assume the state (pressure, temperature, humidity etc.)which also prevails in the remaining part of the device. The split beam 34 made diverging by means of lens 35 falls, _via_ a system of of lenses 41, on a frosted glass 42 on which a few interference rings are displayed. One of these interference rings is kept centrered on two juxtaposed photo cells 43 the signal of which tunes the laser (not shown here) _via_ a difference amplifier 44 in such manner that the effective wavelength of the generated laser beam corresponds to the effective wave length which is fixed by the Fabry-Perot etalon.

It is of course also possible to use a detection system as used in Figure 2 in the laser device shown in Figure 1 and to use a detection system as used in the Figure " device in device shown in Figure 2. In that case it is possible, analogous by to the second etalon at point A in Figure 1, to provide before the detection system a second etalon which is tuned to the same effective wave length as the first etalon but which has a different distance between its reflectors. In a detection system as used in Figure 2, however, it is also possible to use a splitting mirror instead of mirror 32 and to cause the split beam passing through said splitting mirror to be incident on an intensity-sensitive detection system _via_ the second etalon.

0094709

CLAIMS

1.        A laser device including a laser resonator comprising two reflectors which are situated on one axis an means are provided for displacing one of the relflectors along the said axis wherein one of the reflectors passes the generated of beam radiation the device further comprising a beam splitter and a Fabry-Perot interferometer the interferometer forming an effective wavelength etalon wherein at least part of the radiation beam impinges through the interferometer on a means in such manner that the effective wave length fixed by the etalon is equal to the effective wave length of the radiation generated by the laser, characterized in that the etalon is centered on the said axis and the beam splitter is provided in the path of radiation before or after the etalon.

2.        A laser device as claimed in Claim 1, characterized in that the beam splitter is provided before the etalon in the light path and one of the split beams impinges on the detection system after passing through the etalon substantially parallel to the other split beam.

3.        A laser device as claimed in Claim1, characterized in that the beam splitter is provided in the path of radiation after the etalon and one of the split beams impinges on the detection system.

4.        A laser device as claimed in Claim 1, 2 or 3, characterized in that the detection system is an intensity sensitive detection system and the maximum of the intensity of the radiation passed through the etalon is determined by reciprocating one of the reflectors of the laser at fixed intervals of time.

5.        A laser device as claimed in Claim 4, characterized in that the split beam impinges on the detection system via a second etalon, which second etalon is tuned to the same effective wave length as the first etalon

0094709

11-4-83

but has a different distance between the etalon reflectors.

6.          An interferometer comprising a source of radiation which provides a radiation beam, a beam splitter for forming a first and a second split beam from the radiation beam, which two split bems, after reflection of the first split beam are made to converge on a surface of an object to be examined in the plane of a radiation-sensitive detection system, characterized in that the radiation source is a laser device as claimed in any of the preceding Claims.

7.          An interferometer as claimed in Claim 6, characterized in that the radiation sensitive detection system comprises a frame-shaped element the frame period of which corresponds to the period of the linear interference pattern of the two superimposed split beams.

**0094709**

**Internationaal Octrooibureau B.V.**

Office: Prof. Holstlaan 6
Eindhoven - The Netherlands

Internationaal Octrooibureau B.V. - P.O. Box 220 - 5600 AE  Eindhoven - The Netherlands

European Patent Office
Erhardtstrasse 27
D-8000 MÜNCHEN 2
Deutschland

| onderw. re. conc. betr. | doorkiesnummer  in-dialling accès intern dir.  durchwahl | datum, date |
|---|---|---|
| PHN 10.352 EP DUYS/JB | (040) 743554 | May 9, 1983 |

Re: PHN 10.352 EP
    Date of request for grant of a European Patent, May 3, 1983

Dear Sirs,

        There are some typing errors in the above identified patent
application and we ask you to alter them.
On page 1, line 4, add "one" after "placing"
                alter "alslong" to "along"
                alter "he" to "the"
Page 1, line 7, alter "interterometer" to "interferometer"
page 1, line 9, alter "bean" to "beam"
page 1, line 11, alter "established" to "fixed"
page 2, line 2, alter "becouse" to "because"
page 2, line 9, alter "inentioned" to "mentioned"
page 2, line 13, alter "splet" to "split"
page 2, line 15, alter "imponges" to "impinges"
page 3, line 18, alter "tionswource" to "tionsource"
page 3, line 18, alter "frepuency-" to "frequency-"
page 3, line 20, alter "comprisds" to "comprises"
page 3, line 22, alter "swurce" to "source"
page 4, line 14, alter "1 um" to "1 um"
page 4, line 20, alter "censisting" to "consisting"
page 5, line 3, alter "sinuoidal" to "sinusoidal"

.NATIONAAL OCTROOIBUREAU B.V.
EINDHOVEN

Nr.     2

PHN 10.352 EP

page 5, line 7, alter "az" to "as"

page 5, line 9, alter "inturn" to "in turn"

page 6, line 23, alter "Becouse" to "Because"

page 6, line 37, alter "iutensity" to "intensity"

page 7, line 14, alter "switcleton" to "switchet on"

page 9, line 3, alter "relflectors" to "reflectors"

page 9, line 5, alter "of beam" to "beam of"

page 9, line 9, add after "a" and before "means";
   "detection system which controls the said

page 9, line 12, add after "centered" and before "on":
   "directly".

The Professional Representative,

Ir. A.M.W. Duys

The request for correction is allowed under
R. 88 EPC / with the exception of the deleted
points /.     2 3. 33. 83
THE HAGUE, –
RECEIVING SECTION

**FIG.1**

**FIG.2**